# EUROPÄISCHE PATENTANMELDUNG

(11) **EP 1 131 989 A2**
(43) Veröffentlichungstag der Anmeldung: **12.09.2001**
(21) Anmeldenummer: 01104976.4
(22) Anmeldetag: 01.03.2001
(51) Int. Cl.: A01B 15/02

(54) **Verschleisselement**

(30) Priorität: 07.03.2000 US 521079
(71) Anmelder: DEERE & COMPANY, Moline, Illinois 61265-8098 (US)
(72) Erfinder: Revankar, Gopal Subray, Moline, IL 61265 (US)
(74) Vertreter: Holst, Sönke, Dr.

(57) **Zusammenfassung**

Die Erfindung bezieht sich auf ein Verschleißelement, insbesondere einen Verschleißbelag (34, 44) oder eine Verschleißplatte, das in Umgebungen verwendbar ist, die hohe Resistenz gegen Stöße und Abrieb erfordern, mit einem Blech aus einem ersten Material (vorzugsweise ein Stahlblech (36, 46)) mit geringem Kohlenstoffanteil, das mit einer Schicht aus einem zweiten Material (vorzugsweise Gusseisen mit hohem Chrom- und Kohlenstoffanteil) durch Diffusionsschweißen an einer Schnittstelle des Blechs mit der Schicht verbunden ist.

Es wird vorgeschlagen, dass das Blech aus erstem Material mit einer Oberfläche mit Einbuchtungen (insbesondere Löchern (40, 48)) versehen ist, und dass das zweite Material auch in den Einbuchtungen angeordnet ist, wodurch die beiden Materialien miteinander verrastet sind.

## Beschreibung

Die Erfindung betrifft ein Verschleißelement, insbesondere einen Verschleißbelag oder eine Verschleißplatte, das in Umgebungen verwendbar ist, die hohe Resistenz gegen Stöße und Abrieb erfordern, mit einem Blech aus einem ersten Material, das mit einer Schicht aus einem zweiten Material durch Diffusionsschweißen an einer Schnittstelle des Blechs mit der Schicht verbunden ist.

Es gibt viele Anwendungen in der Industrie, bei denen ein Bauelement widerstandsfähig gegen Aufprall-(Stoß-)belastungen und auch Abnutzungen sein muss. Gute Beispiele sind der Belag von Gebläsen und des Austragsschachts von Feldhäckslern in der landwirtschaftlichen Industrie. Die Abnutzungsresistenz erfordert, dass das Bauelement eine große Härte haben sollte, wenigstens bis in eine hinreichende Tiefe der Oberflächenschicht des Bauelements, die aufprallenden Lasten ausgesetzt ist, und Abnutzungsfestigkeit, um eine angemessen lange Abnutzungszeit des Bauelements zur Folge zu haben. Jedoch ist beinahe immer die Bruchfestigkeit gering, wenn die Härte eines Materials hoch ist. Diese zwei Größen sind gegenläufig. Wenn ein Teil somit als abnutzungsresistent entworfen wird, und die Festigkeit ignoriert wird, kann das Bauelement aufgrund von Stößen versagen, bevor es wegen Abnutzung versagt. In ähnlicher Weise kann ein Teil wegen Abnutzung versagen, lange bevor es durch Stöße versagt, wenn es nur für hohe Stoßfestigkeit entworfen wird. Im allgemeinen wird beim Entwurf und beim Spezifizieren von Verarbeitungsverfahren eines Bauelements eine Kombination als Kompromiss aus Abnutzungsfestigkeit (Härte) und Stoßfestigkeit gesucht. Es ist daher offensichtlich, dass ein Bauelement nicht das Maximum dieser beiden Größen aufweisen kann, wenn es aus einem einzigen homogenen Material hergestellt ist.

Ein bekannter Verschleißbelag, der zur Verwendung in einem Feldhäcksler entworfen wurde, umfasst eine Platte aus mehreren Komponenten, die durch Gießen von einer Eisenschicht mit hohem Chrom- und Kohlenstoffanteil auf ein Stahlblech mit geringem Kohlenstoffanteil hergestellt wird, wobei die Schicht und das Blech jeweils ungefähr 6 mm dick sind. Während diese zusammengesetzte Platte manche erwünschten Eigenschaften hat, die Folge der Kombination der Materialien sind, ist man der Meinung, dass die Art des Zusammenfügens der Materialien nicht völlig befriedigend ist, da sie eine Trennung an den verbundenen Schnittstellen der Materialien zur Folge haben kann. Außerdem eignet sich dieser Aufbau nicht zur Herstellung relativ dünner Verschleißbeläge, da der Gussprozess erfordert, dass die Gussform relativ dick ist, damit dass geschmolzene Gussmaterial fließen und die Form vollständig füllen kann.

Das der Erfindung zugrunde liegende Problem wird darin gesehen, eine verbesserte Verschleißplatte aus mehreren Komponenten bereitzustellen, die als Belag für verschiedene Bauteile eines Feldhäckslers geeignet ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, ein Blech aus einem ersten Material mit Einbuchtungen zu versehen. Eine Schicht aus einem zweiten Material wird mit dem Blech durch Diffusionsschweißen verbunden, was durch Gießen des durch Wärme verflüssigten zweiten Materials auf das Blech erfolgen kann. Die Einbuchtungen, in die das zweite Material eindringt, erhöhen die Fläche der Schnittstelle zwischen den beiden Materialien und bewirken, dass die Materialien mechanisch miteinander verrasten.

Auf diese Weise erhält man ein Verschleißelement, insbesondere einen Verschleißbelag oder eine Verschleißplatte, das in Umgebungen verwendbar ist, die hohe Resistenz gegen Stöße und Abrieb erfordern. Es hat eine durch das Diffusionsschweißen sehr zuverlässige Bindungsschicht zwischen den Materialien, deren Fläche durch die Einbuchtungen vergrößert ist. Das Blech verleiht dem Verschleißelement die nötige Festigkeit, während die Schicht eine verschleißfeste Oberfläche bereitstellt. Der erfindungsgemäße Aufbau erlaubt die Herstellung von relativ dünnen Verschleißbelägen, ohne Verlust an Zusammenhalt der Materialien.

Das erste Material ist vorzugsweise Stahl mit geringem Kohlenstoffanteil. Als zweites Material kommt insbesondere Gusseisen mit hohem Chromanteil und hohem Kohlenstoffanteil in Frage. Aber auch die Verwendung anderer geeigneter Materialien ist denkbar.

Die Form der Einbuchtungen ist grundsätzlich beliebig. Es kann sich um durchgehende Löcher handeln, um Sackbohrungen oder andere, beispielsweise durch Gießen oder Fräsen erzeugte Rillen oder Vertiefungen beliebigen Querschnitts.

Das Blech kann als Kern mit dem zweiten Material umgossen werden. Dazu kann man das Blech in eine Sandform einlegen und das verflüssigte zweite Material in die Sandform gießen, wobei es um beide Oberflächen und die Einbuchtungen des Blechs fließt. Dabei entsteht durch Diffusionsschweißen eine Bindung zwischen dem Blech und der entstehenden Schicht aus dem zweiten Material. Alternativ wird nur eine Oberfläche des Blechs mit dem zweiten Material begossen.

In den Zeichnungen sind zwei nachfolgend näher beschriebene Ausführungsbeispiele der Erfindung dargestellt. Es zeigt:
- Fig. 1: eine schematische Seitenansicht eines Feldhäckslers, für den die vorliegende Erfindung geeignet ist,
- Fig. 2: eine perspektivische Ansicht eines Verschleißbelags zur Verwendung im Gebläsegehäuse des Feldhäckslers der Figur 1,
- Fig. 3: eine vertikale Querschnittsansicht durch den Verschleißbelag der Figur 2,
- Fig. 4: eine Ansicht der gelochten Stahlplatte, die als Kern oder Substrat verwendet wird, auf oder um die geschmolzenes weißes Eisen gegossen wird, um den Verschleißbelag herzustellen,
- Fig. 5: eine Mikroskopieaufnahme bei etwa 10facher Vergrößerung, die einen vertikalen Querschnitt des Verschleißbelags der Figur 2 zeigt, und
- Fig. 6: eine vertikale Querschnittsansicht einer zweiten Ausführungsform des Verschleißbelags, der sich besonders zur Verwendung im Austragsschacht eines Feldhäckslers gemäß Figur 1 eignet.

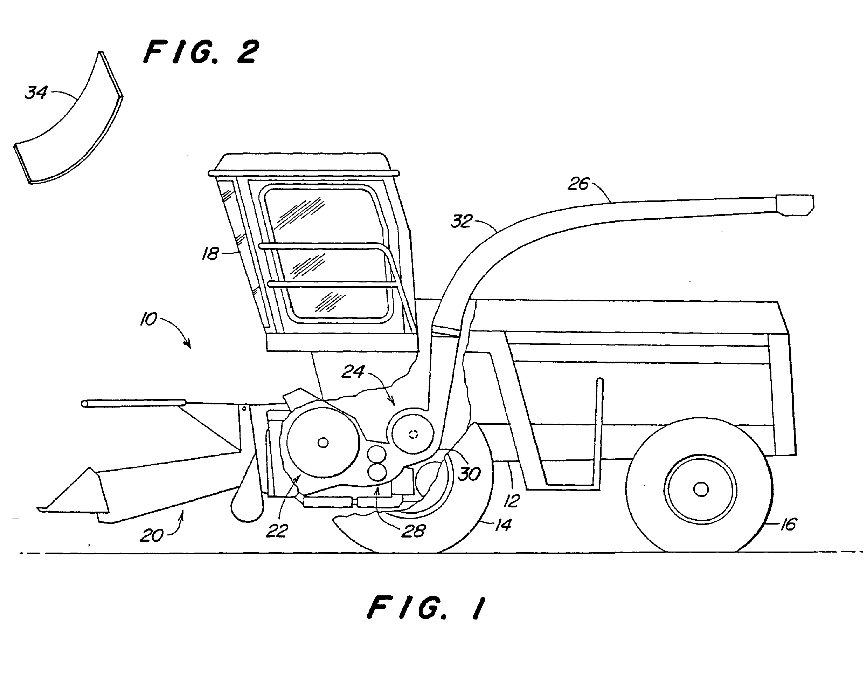

In Figur 1 ist ein selbstfahrender Feldhäcksler 10 dargestellt, welcher ein Beispiel des Typs industrieller Ausrüstungsgüter ist, bei denen die vorliegende Erfindung nützlich ist. Der Feldhäcksler 10 umfasst einen Hauptrahmen 12, der von einem vorderen Paar angetriebener Räder 14 und einem hinteren Paar von auf dem Erdboden abrollenden Rädern 16 abgestützt wird. Eine Bedienerkabine 18 ist am oberen, vorderen Teil des Rahmens 12 angebracht und ein Erntegut aufnehmender Vorsatz 20 ist mit dem vorderen Ende des Rahmens 12 gekoppelt, so dass ein in der Bedienerkabine 18 sitzender Bediener ihn deutlich sehen kann. Zur Aufnahme von Erntegut, das vom Vorsatz 20 zugeführt wird, ist hinter dem Erntegut aufnehmenden Vorsatz 20 eine Häckseltrommel 22 angeordnet, die eine Vielzahl von (nicht gezeigten) Messern trägt, die in der Nähe eines Gegenmessers (nicht gezeigt) rotieren, um Erntegut einschließlich Halmen und Stielen in kurze Stücke zu schneiden. Das Erntegut wird durch eine Öffnung in dem Gehäuse, das die Häckseltrommel 22 umschließt, ausgeworfen und strömt von dort durch einen Kanal, der mit einem Gehäuse gekoppelt ist, das ein Gebläse 24 enthält, das Paddel aufweist, die in das Erntegut eingreifen und es fördern sowie einen Luftstrom erzeugen, der das Erntegut nach oben in einen Austragschacht 26 trägt, von dem das Erntegut auf einen gezogenen (nicht gezeigten) Behälter ausgeworfen wird. Zwischen der Häckseltrommel 22 und dem Gebläse 24 ist ein Körnerprozessor 28 angeordnet, der ein Paar gegensinnig rotierender Walzen aufweist, zwischen denen gehäckseltes Gut zugeführt wird, wobei der Körnerprozessor 28 nur für Erntegüter wie Mais verwendet wird, die aufzubrechende Körner aufweisen.

Das Erntegut und jegliches Fremdmaterial, das damit vermischt sein könnte, werden mit hoher Geschwindigkeit durch die Gehäuse und Leitungssysteme des Feldhäckslers 10 bewegt. Wegen der abrasiven und/oder harten Natur einiger der Teilchen in dieser Materialmischung ist die potentielle Abnutzung an Stellen besonders hoch, an denen das Material auftrifft und/oder gleitet. Eine derartige Stelle ist mit 28 gekennzeichnet, wo das Material entlang des gekrümmten Teils 30 des Gehäuses des Gebläses 24, welcher die Richtung des Materialflusses von etwa horizontal auf vertikal ändert, auftrifft und gleitet. Eine andere derartige Stelle ist die obere Wand des gekrümmten Abschnitts 32 des Austragsschachts 26, gegen den Material fast senkrecht vom Gebläse 24 auftrifft und durch die es etwa horizontal zum offenen Austrittsende des Austrittsschachts geführt wird. Diese zwei Stellen sind gute Kandidaten zur Verwendung eines nach den Grundsätzen der vorliegenden Erfindung aufgebauten Verschleißbelags, der aber auch für jede andere Stelle mit potentiell hoher Abnutzung geeignet ist.

In Figur 2 ist ein austauschbarer Verschleißbelag in Form einer Platte 34 dargestellt, der genau zur Anbringung entlang der unteren gekrümmten Wand des gekrümmten Teils 30 des Gebläses geformt ist. Da herausgefunden wurde, dass diese spezielle Stelle sowohl recht starke Stöße (durch auftreffendes Material) als auch Abrasion erfährt, ist für diese Anwendung ein relativ dicker, entsprechend den Grundsätzen der vorliegenden Erfindung aufgebauter Verschleißbelag bevorzugt.

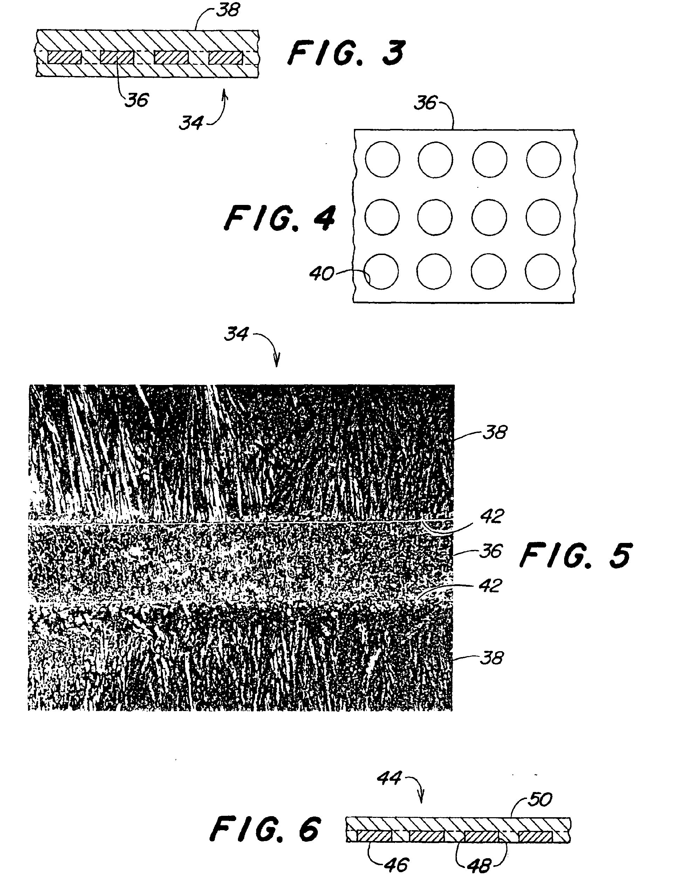

In Figur 3 ist eine erste Ausführungsform der Erfindung dargestellt, in der der Verschleißbelag 34 aus einem Material aus mehreren Komponenten aufgebaut ist, das einen Kern umfasst, der durch ein dünnes Stahlblech 36 definiert ist, und eine gegossene Metallumhüllung 38, die den Kern umgibt. Vorzugsweise ist das Stahlblech 36 aus einem Stahl mit geringem Kohlenstoffanteil hergestellt und mit einer Reihe von Löchern 40 perforiert, wie in Figur 4 dargestellt. Während die Löcher 40 hier kreisförmig dargestellt sind und in einem geraden Gittermuster angeordnet sind, würden verschiedene andere Formen und Muster befriedigende Leistungen erbringen, wie weiter unten näher erläutert wird. Die gegossene Metallumhüllung 38 ist vorzugsweise aus einem harten Material hergestellt, wie weißem Eisen mit hohem Chromanteil.

Das weiße Eisen mit hohem Chromanteil hat eine hohe Härte und seine Mikrostruktur umfasst einen hohen Anteil an Chromkarbiden und eine als Martensit bezeichnete harte Phase, die gemeinsam dem Verschleißbelag 34 eine hohe Verschleißfestigkeit verleihen. Das Stahlblech 36 besitzt keine hohe Härte, ist aber zäh und bricht nicht leicht und zerfällt auch nicht leicht in Stücke, wenn der Verschleißbelag 34 hohen Stoßbelastungen ausgesetzt ist.

Die Herstellung des Verschleißbelags 34 wird entweder durch Auswahl eines flachen, rechteckigen Stahlblechs 36 mit niedrigem Kohlenstoffanteil oder durch ein Zurechtschneiden in die gewünschte Größe durchgeführt. Diese Bleche sind mit Perforationen kommerziell erhältlich und können mit einer gewünschten Größe, Form und Anordnung der Löcher eingekauft werden, oder ein massives Blech wird ausgewählt und dann einem Stanzvorgang oder anderem Verfahren unterzogen, um die gewünschten Löcher herzustellen. Danach wird das perforierte Blech gewünschter Größe in die Form des gewünschten Verschleißbelags 34 gebogen, wobei zu berücksichtigen ist, dass das Stahlblech 36 der Kern des Verschleißbelags 34 sein soll, und dass die Umhüllung um es herum zu erstellen ist. Das Stahlblech 36 wird dann gründlich gereinigt und sandgestrahlt, um saubere metallische Oberflächen freizulegen. Danach wird eine Sandform hergestellt mit einer Kavität, die der endgültigen Form des Verschleißbelags 34 entspricht, die nach der Verfestigung des Gusses entsteht, jedoch nicht exakt gleich mit ihr ist. Es ist anzumerken, dass die Form der Kavität keine exakte Replik der gewünschten endgültigen Form des Gusses ist, sondern so geformt ist, dass dem Schrumpfen des Gusses während der Abkühlung in der Form von der Temperatur des geschmolzenen Metalls auf Raumtemperatur Rechnung getragen wird. Sie trägt auch den unterschiedlichen thermischen Kontraktions-(oder Expansions-)Koeffizienten der beiden bei der Herstellung des Gusses aus zwei Komponenten verwendeten Materialien Rechnung. Sobald das Stahlblech 36 korrekt in der Sandform positioniert ist, wird geschmolzenes weißes Gusseisen in die Sandform gegossen, wo es um das Stahlblech 36 herum und in die Perforationen des Stahlblechs 36 fließt und so die Metallumhüllung 38 bildet.

In Figur 5 ist eine Mikroskopfotografie wiedergegeben, die einen vertikalen Schnitt durch den Verschleißbelag 34 zeigt. Es ist erkennbar, dass sich eine metallurgische Bindung bildet, wenn das geschmolzene weiße Gusseisen in Kontakt mit dem Stahlblech 36 kommt. Insbesondere ist erkennbar, dass eine Bindungs- oder Schnittstellenschicht 42, deren Zusammensetzung zwischen der von Eisen mit hohen Chromanteil und Stahl mit geringem Kohlenstoffanteil liegt, an den gegenüberliegenden Seiten des Stahlblechs 36 entstanden ist, wo es in Kontakt mit dem geschmolzenen weißen Gusseisen gekommen ist. Es besteht nur eine sehr kleine Wahrscheinlichkeit der Bildung einer neuen, spröden intermetallischen Verbindungsschicht zwischen dem Chromeisen und dem Stahl, da das Hauptelement beider Materialien Eisen ist. Diese Bindungs- oder Schnittstellenschichten 42 gewährleisten, dass eine wirklich verbundene Masse gebildet wird, die die Vorteile sowohl des harten Chromeisens als auch des zähen Stahls ergibt. Es wird erwartet, dass die Spannungen an den Übergängen wegen der Bildung der Bindungs- oder Schnittstellenschichten 42 minimiert sind.

Die Löcher 40 im Stahlblech 36 helfen beim Befestigen des Stahlblechs 36 in der Metallumhüllung 38 und vermindern das Bestreben nach einer Trennung der beiden, sogar wenn sich an einigen Stellen der Schnittstelle keine Bindungs- oder Schnittstellenschicht 42 bildet. Wie oben erwähnt, sind Stahlbleche 36 mit unterschiedlichen Typen von Perforationen kommerziell verfügbar. Man kann sich das gelochte Stahlblech 36 mit geeigneter Perforations- (Loch-) Größe, Abstand und Anordnung aussuchen. Die von den Perforationen belegte Fläche legt die Fläche der Bindungs- oder Zwischenschicht 42 fest, die während des Gießens hergestellt wird (die Lochfläche ist umgekehrt proportional zur Fläche der Bindungs- oder Zwischenschicht 42). Sie ist auch ein direktes Maß für die Leichtigkeit, mit der das flüssige Metall durch die Kavität der Form fließt. Je größer die Fläche, desto leichter ist der Metallfluss, was eine Erwägung bei der Herstellung dünner Metalleinlagen ist, wie weiter unten diskutiert wird. Es ist bevorzugt, ein möglichst dünnes Stahlblech 36 zu verwenden, um einen schnellen Temperaturanstieg der Stahloberfläche auf die Temperatur des geschmolzenen Eisens sicherzustellen. Das ermöglicht die Entstehung einer hinreichenden Dicke der Bindungs- oder Schnittstellenschicht 42 in der kurzen Zeit, in der sich das geschmolzene Metall verfestigt und auf eine niedrigere Temperatur abkühlt (etwa 1000 °C). Unter dieser Temperatur erwartet man, dass nur wenig Diffusion der Elemente stattfindet und daher wenig weitere Bindungen zwischen den zwei Materialien entstehen.

In Figur 6 ist ein vertikaler Querschnitt durch einen Verschleißbelag in Form einer Platte 44 gezeigt, der nach einer zweiten Ausführungsform der Erfindung hergestellt wurde. Wie die erste Ausführungsform weist die zweite Ausführungsform ein Stahlblech 46 mit geringem Kohlenstoffanteil auf, das mit einem Muster von Löchern 48 versehen ist, so dass es perforiert ist. Anders als bei der ersten Ausführungsform, bei der das Stahlblech 36 von dem weißen gegossenen Eisen 38 umhüllt ist, ist hier weißes gegossenes Eisen nur mit einer Oberfläche des Stahlblechs verbunden, während es ebenfalls dadurch mit ihr verbunden ist, dass es in den Löchern 48 vorhanden ist. Daher kann der Verschleißbelag 44 relativ dünn hergestellt werden, beispielsweise 4 mm dick, wobei das Stahlblech 46 und das gegossene Eisen jeweils 2 mm dick sind. Es ist daher machbar, einen dünnen Verschleißbelag mit größeren Abmessungen zu gießen, als sie zum Belegen des gekrümmten Abschnitts 32 der oberen Wand des Austragschachts 26 nötig wären. Bei der Herstellung dünner Plattengüsse würde das Stahlblech 46 nicht in eine Form gelegt, um vom geschmolzenen weißen Eisen umhüllt zu werden, sondern es würde als Trägerblech auf einer Seite der Formkavität verwendet. Dann würde eine Bindungs- oder Zwischenschicht 42 zwischen dem weißen Gusseisen und nur einer Oberfläche des Stahlblechs 46 entstehen, jedoch wäre der entstehende dünne Guss zur Verwendung in dem gekrümmten Abschnitt 32 des Austragsschachts 26 geeignet, da der Verschleißbelag wesentlich weniger Stößen ausgesetzt ist als der im gekrümmten Teil 30 des Gehäuses des Gebläses 24 angebrachte Verschleißbelag 34.

Es ist daher als vorteilhaft anzusehen, dass die Verschleißbeläge 34 und 44 aus mehreren Komponenten, oder Verschleißbeläge für jegliche ähnliche Anwendung, in der Abnutzung und Stöße den Konstrukteur vor eine ernsthafte Herausforderung stellen, durch die Auswirkung der Tatsachen, dass die Verstärkung oder der Kern der Beläge aus preiswertem, kommerziell erhältlichem perforierten Stahlblech gemacht ist, die leicht in die gewünschte Form gebracht werden können, und dass das weiße Gusseisen mit hohem Chromanteil, das mit dem Stahlblech verbunden ist, ebenfalls kommerziell gut bekannt ist, relativ einfach und preiswert herstellbar sind. Es ist weiter als vorteilhaft anzusehen, dass die Verwendung perforierter Stahlbleche Verschleißbeläge oder -platten aus mehreren Komponenten zur Folge hat, bei denen die zwei Materialien nicht nur strukturell integriert sind, sondern ihre gemeinsam gebildeten Eigenschaften wegen der vergrößerten Bindungsfläche verbessert sind.

## Patentansprüche

1. Verschleißelement, insbesondere Verschleißbelag (34, 44) oder Verschleißplatte, das in Umgebungen verwendbar ist, die hohe Resistenz gegen Stöße und Abrieb erfordern, mit einem Blech aus einem ersten Material, das mit einer Schicht aus einem zweiten Material durch Diffusionsschweißen an einer Schnittstelle des Blechs mit der Schicht verbunden ist, **dadurch gekennzeichnet**, dass das Blech mit einer Oberfläche mit Einbuchtungen versehen ist, und dass das zweite Material auch in den Einbuchtungen angeordnet ist, wodurch die beiden Materialien miteinander verrastet sind.

2. Verschleißelement nach Anspruch 1, **dadurch gekennzeichnet**, dass das Blech aus dem ersten Material ein Stahlblech (36, 46) mit geringem Kohlenstoffanteil ist.

3. Verschleißelement nach Anspruch 1 oder 2, **dadurch gekennzeichnet**, dass die Schicht aus dem zweiten Material Gusseisen mit hohem Chromanteil und hohem Kohlenstoffanteil ist.

4. Verschleißelement nach einem der vorhergehenden Ansprüche, **dadurch gekennzeichnet**, dass die Einbuchtungen Perforationen (40, 48) sind.

5. Verschleißelement nach einem der vorhergehenden Ansprüche, **dadurch gekennzeichnet**, dass das Blech aus dem ersten Material einen Kern innerhalb der Schicht aus dem zweiten Material bildet, wobei die Schicht auf gegenüber liegenden Seiten des Blechs angeordnet ist.

6. Verschleißelement nach einem der Ansprüche 1 bis 4, **dadurch gekennzeichnet**, dass das die Schicht aus dem zweiten Material nur auf einer Seite des Blechs angeordnet ist.

7. Verschleißelement nach einem der Ansprüche 1 bis 6, **dadurch gekennzeichnet**, dass das Blech aus dem ersten Material und die Schicht aus dem zweiten Material jeweils etwa 2 mm dick sind.

8. Erntefahrmaschine, insbesondere Feldhäcksler (10), mit einem Verschleißelement nach einem der vorhergehenden Ansprüche, wobei das Verschleißelement mit einem Erntegutfluss in Berührung steht.
